**Europäisches Patentamt**

**European Patent Office**

**Office européen des brevets**

(19)

(11) Veröffentlichungsnummer : **0 166 258 B2**

(12) # NEUE EUROPÄISCHE PATENTSCHRIFT

(45) Veröffentlichungstag der neuen Patentschrift :
**02.09.92 Patentblatt 92/36**

(51) Int. Cl.$^5$ : **B60K 28/16**

(21) Anmeldenummer : **85106639.9**

(22) Anmeldetag : **30.05.85**

---

(54) **Antriebsschlupfregelsystem.**

---

(30) Priorität : **22.06.84 DE 3423063**

(43) Veröffentlichungstag der Anmeldung :
**02.01.86 Patentblatt 86/01**

(45) Bekanntmachung des Hinweises auf die
Patenterteilung :
**02.12.87 Patentblatt 87/49**

(45) Bekanntmachung des Hinweises auf die
Entscheidung über den Einspruch :
**02.09.92 Patentblatt 92/36**

(84) Benannte Vertragsstaaten :
**DE FR GB IT SE**

(56) Entgegenhaltungen :
**DE-A- 1 136 215**
**DE-A- 2 818 813**
**DE-A- 2 914 165**
**DE-A- 3 047 070**
**DE-A- 3 127 302**

(56) Entgegenhaltungen :
**DE-A- 3 215 739**
**DE-B- 2 423 800**
**DE-B- 2 648 042**
**US-A- 3 288 232**
**US-A- 4 260 199**

(73) Patentinhaber : **ROBERT BOSCH GMBH**
**Postfach 30 02 20**
**W-7000 Stuttgart 30 (DE)**

(72) Erfinder : **Jonner, Wolf-Dieter, Ing. (grad.)**
**Burgunderstrasse 25**
**W-7141 Beilstein (DE)**
Erfinder : **Korasiak, Wolfgang, Ing. (grad.)**
**Brombergerstrasse 20**
**W-7120 Bietigheim (DE)**
Erfinder : **Sigl, Alfred, Ing. (grad.)**
**Waldeckstrasse 8**
**W-7126 Gersheim (DE)**

(74) Vertreter : **Kammer, Arno, Dipl.-Ing.**
**ROBERT BOSCH GmbH Zentralabteilung**
**Patente Postfach 30 02 20**
**W-7000 Stuttgart 30 (DE)**

EP 0 166 258 B2

Jouve, 18, rue Saint-Denis, 75001 PARIS

**Beschreibung**

Die Erfindung betrifft ein Antriebsschlupfregelsystem für ein Fahrzeug mit den Merkmalen des Oberbegriffs des Anspruchs 1.

Antriebsschlupfregelsysteme, die bei Durchdrehneigung eines der angetriebenen Räder in die Bremse dieses Rads Druck einsteuern und den Druck so regeln, daß der Antriebsschlupf in einem zulässigen Bereich bleibt, sind z. B. aus der DE-A- 3127 302 bekannt. Dort wird jeweils ein Rad gebremst, wenn es Blockierneigung zeigt und zusätzlich wird noch das Motordrehmoment geregelt erniedrigt, wenn beide Räder gleichzeitig Durchdrehneigung zeigen.

Die Erfindung bezweckt eine Verbesserung der bekannten Antriebsschlupfregelsysteme.

Dies wird durch ein erfindungsgemäßes Antriebsschlupfregelsystem mit den Merkmalen des unabhängigen Anspruchs 1 erreicht, Besondere Ausführungsarten der Erfindung sind in den abhängigen Ansprüchen angegeben.

Durch die erfindungsgemäße Verbesserung der bekannten Antriebsschlupfregelsysteme wird erreicht, daß die Reaktionszeit die vom Feststellen der Durchdrehneigung bis zum Bremsbeginn vergeht, verkürzt wird, so daß der Regeleingriff schon früher erfolgt und das Rad nicht unnötig hochbeschleunigt wird.

Man kann verschiedene Kriterien vorsehen, die diese vorherige Einsteuerung geringen Drucks auslösen. So kann man die Änderung des Stellglieds (z. B. Drosselklappe) überwachen, das eine vom Fahrer gesteuerte Motordrehmomenterhöhung bewirkt und bei Feststellung einer schnellen (große Änderungsgeschwindigkeit) und gegebenenfalls großen Änderung des Stellglieds im Sinne einer Motordrehmomenterhöhung den geringen Bremsdruck einsteuern. Dabei wird davon ausgegangen daß es bei niedrigem oder mittlerem Reibbeiwert bei solchen Änderungen am Stellglied zu einem Durchdrehen kommt, dem vorgebeugt werden soll. Zusätzlich kann man das Ansprechen dieser geringen Druckeinsteuerung noch davon abhängig machen, ob sich das Fahrzeug oberhalb einer vorgegebenen niedrigen Geschwindigkeit von z. B. 10 km/h bewegt bzw. nicht mehr steht. Es ist jedoch auch möglich unterhalb der Ansprechschwellen für die eigentliche Regelung weitere Schwellen für den Schlupf $\lambda$ und/oder die Radbeschleunigung $V_R$ vorzusehen, bei deren Überschreiten die Einsteuerung des geringen Drucks ausgelöst wird. Wenn beispielsweise für das Auslösen der Regelung für $\lambda$ = 2 km/h und für $V_R$ = 5 m/sec$^2$ gelten, kann man die Schwellen für das Auslösen der geringen Druckeinsteuerung auf z. B. $\lambda'$= 1 km/h und $V_R'$ = 3 m/sec$^2$ legen. Auch dieses Ansprechen über die Schwellen kann man, wie bei der oben erläuterten Auslösung, mit der Geschwindigkeit des Fahrzeugs verknüpfen, also die Einsteuerung geringen Drucks nur oberhalb einer Geschwindigkeitsschwelle zulassen.

Die Einsteuerung wird vorzugsweise so vorgenommen, daß durch die Auslösesignale ein Puls vorgegebener Länge ausgelöst wird, der ein Ventil öffnet und dabei den geringen Bremsdruck einsteuert, der so groß ist, daß die Bremsbacken gerade angelegt werden, aber noch keine wesentliche Bremsung bewirken. Der Bremsdruck kann z. B. bei etwa 5 bis 10 bar liegen.

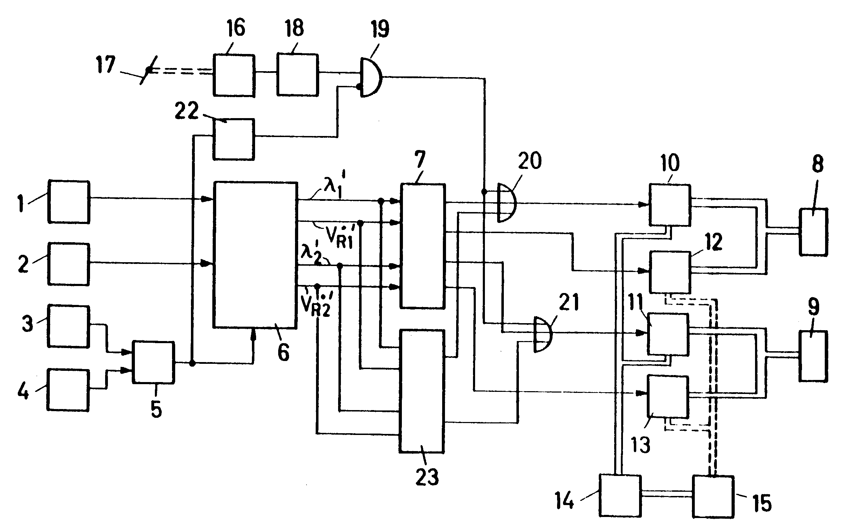

Anhand des Ausführungsbeispiels der Zeichnung wird die erfindungsgemäße Lösung näher erläutert. Dort sind mit 1 und 2 Sensoren bezeichnet, die den angetriebenen Rädern zugeordnet sind und der Geschwindigkeit dieser Räder entsprechende Signale erzeugen. Entsprechende Sensoren 3 und 4 sind den nicht angetriebenen Rädern zugeordnet. In einem Block 5 wird aus den Signalen der Sensoren 3 und 4 der Mittelwert gebildet, der als Vergleichsgröße für die Schlupfbildung dient. In einem Signalverarbeitungsblock 6, dem die Signale der Sensoren 1 und 2 und des Blocks 5 zugeführt werden, werden für beide Räder getrennt Schlupfsignale $\lambda1$ bzw. $\lambda2$ und Radbeschleunigungssignale $V_{R1}$ bzw. $V_{R2}$ gebildet. In einem Vergleichs- und Logikblock 7 werden hieraus Ansteuersignale für die den Bremsen 8 und 9 der angetriebenen Räder zugeordneten Einlaßventile 10 und 11 und Auslaßventile 12 und 13 erzeugt. Bei Ansteuerung der Einlaßventile 10 bzw. 11 werden die Bremsen 8 bzw. 9 mit einer Druckquelle 14 verbunden, bei Ansteuerung der Auslaßventile 12 bzw. 13 wird die Bremse 8 bzw. 9 an ein druckloses Reservoir 15 angeschlossen. Ohne Ansteuerung erfolgt Druckkonstanthaltung an der Bremse.

Die Regelung des Bremsdrucks an der einzelnen Radbremse kann in Abhängigkeit von einer erkannten Durchdrehneigung in bekannter Weise erfolgen. Erfindungsgemäß soll die Totzeit zwischen Erkennen einer Durchdrehneigung und dem Beginn der Regelung des Bremsdrucks herabgesetzt werden. Dies wird dadurch erreicht, daß mit dem Block 16, der z. B. ein induktiver Geber ist, die Änderung der Stellung der Drosselklappe 17 überwacht wird. Der Block 16 gibt ein Signal ab, wenn die Drosselklappe mit wenigstens einer vorgegebenen Geschwindigkeit und um wenigstens einen vorgegebenen Betrag in Richtung einer Erhöhung der Energiezufuhr zum Motor verstellt wird.

Dieses Signal setzt einen monostabilen Multivibrator 18, dessen Ausgangsimpuls vorgegebener Länge über Oder-Gatter 20 und 21 zu den Einlaßventilen 10 und 11 gelangt, diese für eine vorgegebene Zeit öffnet und damit einen Druckpuls an die Bremsen einfeuert, der die Bremsen gerade anlegt,ohne wesentlich zu bremsen. Beim nachfolgenden Erkennen der Durchdrehneigung kann damit der Bremsdruck schnell erhöht werden.

Mittels des Und-Gatters 19 kann der Steuerpuls unterdrückt werden, wenn im Vergleicher 22 eine Fahrzeuggeschwindigkeit erkannt wird, die unter einem vorgegebenen Wert von z. B. 10 km/h liegt.

Zusätzlich oder alternativ kann auch ein weiter Vergleichsund Logikblock 23 vorgesehen sein, der für jedes Rad getrennt einen kurzen Puls erzeugt, wenn eine tiefer liegende $\lambda$- oder $V_R$-Schwelle von dem einzelnen Rad erreicht wird. Auch dieser Puls erzeugt für das einzelne Rad über das zugehörige Einlaßventil einen Druckpuls.

## Patentansprüche

1. Antriebsschlupfregeleinrichtung für ein Fahrzeug, bei der bei Auftreten einer Durchdrehneigung an einem der angetriebenen Räder an diesem Rad ein Bremsdruck zur Verminderung des Antriebsmoments des Rads eingesteuert und in seiner Höhe so geregelt wird, daß das Rad in einem zulässigen Schlupfbereich verbleibt, dadurch gekennzeichnet, daß schon unterhalb der die Durchdrehneigung signalisierenden Schwellen (positive Schlupf $\lambda$ bestimmter Größe und/oder Radbeschleunigung $V_R$ bestimmter Größe automatisch ein geringer Bremsdruck an den Bremsen eingesteuert wird, der so groß ist, daß die Bremsbacken gerade angelegt werden, aber noch keine wesentliche Bremsung erfolgt.

2. Antriebsschlupfregeleinrichtung nach Anspruch 1, dadurch gekennzeichnet, daß die Änderung der Beeinflussung der Energiezuführung zum Motor im Sinne einer Motormomentenerhöhung überwacht wird und daß bei einer vorgegebenen Änderungsgeschwindigkeit und Änderungsgröße oder nur bei einer vorgegebenen Änderungsgeschwindigkeit die geringe Bremsdruckeinsteuerung erfolgt.

3. Antriebsschlupfregeleinrichtung nach Anspruch 1, dadurch gekennzeichnet, daß unterhalb der Ansprechschwellen für die Antriebsschlupfregelung liegende weitere Schwellen für den Schlupf und/oder für die Radbeschleunigung vorgesehen sind und daß bei Überschreiten dieser Schwelle(n) die geringe Bremsdruckeinsteuerung erfolgt.

4. Antriebsschlupfregeleinrichtung nach einem der Ansprüche 1 bis 3, dadurch gekennzeichnet, daß die geringe Bremsdruckeinsteuerung nur oberhalb einer niedrigen Grenzgeschwindigkeit erfolgt.

5. Antriebsschlupfregeleinrichtung nach einem der Ansprüche 1 bis 4, dadurch gekennzeichnet, daß die geringe Bremsdruckeinsteuerung nur erfolgt, wenn eine Kurvenfahrt sensiert wird einem der

6. Antriebsschlupfregeleinrichtung nach Ansprüche 1 bis 5, dadurch gekennzeichnet, daß die geringe Bremsdrucksteuereinrichtung oberhalb einer maximalen Geschwindigkeit von z. B. 130 km/h gesperrt wird.

## Claims

1. Drive slip control device for a vehicle, in which a brake pressure for reducing the drive torque of the wheel is introduced whenever a tendency to slip occurs at one of the driven wheels, at said wheel, and the level of which brake pressure is controlled such that the wheel remains in an allowable slip range, characterised in that, even below the thresholds signalling the tendency to slip (positive slip $\lambda$ of certain magnitude and/or wheel acceleration $V_R$ of certain magnitude), a small brake pressure is automatically introduced at the brakes, the said brake pressure being just large enough for the brake shoes to be applied without any considerable braking yet occurring.

2. Drive slip control device according to Claim 1, characterised in that the change in the influencing of the energy supplied to the engine in the sense of an engine torque increase is monitored and in that the small brake pressure introduction takes place at a predetermined rate of change and magnitude of change or only at a predetermined rate of change.

3. Drive slip control device according to Claim 1, characterised in that further thresholds, below the response thresholds for the drive slip control, for slip and/or for wheel acceleration are provided and in that the small brake pressure introduction takes place if this (these) threshold(s) is (are) exceeded.

4. Drive slip control device according to one of Claims 1 to 3, characterised in that the small brake pressure

EP 0 166 258 B2

introduction only takes place above a low limit speed.

5. Drive slip control device according to one of Claims 1 to 4, characterised in that the small brake pressure introduction only takes place if cornering is sensed.

6. Drive slip control device according to one of Claims 1 to 5, characterised in that the small brake pressure control device is blocked above a maximum speed of, for example, 130 km/h.

**Revendications**

1.- Dispositif de régulation antipatinage pour un véhicule, dans lequel, lors de l'apparition d'une tendance au patinage sur l'une des roues motrices, on commande sur cette roue une pression de freinage pour diminuer le couple d'entraînement de la roue et on règle la valeur de façon que la roue reste dans une zone de patinage autorisée, dispositif caractérisé en ce que, déjà au-dessous des valeurs de seuil (patinage positif $\lambda$ de valeur déterminée et/ou accélération de la roue $V_R$ de valeur déterminée) qui signalent la tendance au patinage, une faible pression de freinage est automatiquement commandée sur les freins, suffisante pour appliquer franchement les mâchoires de frein, mais sans qu'il en résulte encore un freinage notable.

2.- Dispositif de régulation antipatinage selon la revendication 1, caractérisé en ce que l'on surveille la modification de l'influence de l'arrivée de l'énergie au moteur au sens d'un accroissement du couple du moteur ; et en ce que, dans le cas d'une vitesse de modification prescrite et d'une valeur de modification prescrite ou dans le cas seulement d'une vitesse de l'envoi d'une faible pression de freinage.

3.- Dispositif de régulation antipatinage selon la revendication 1, caractérisé en ce qu'il est prévu d'autres seuils, qui se trouvent en-dessous des seuils de réponse pour la régulation antipatinage, pour le patinage et/ou pour l'accélération des roues, et en ce qu'en cas de dépassement de ce seuil ou de ces seuils par valeur supérieure, il en résulte la commande de l'envoi d'une faible pression de freinage.

4.- Dispositif de régulation antipatinage selon l'une des revendications 1 à 3, caractérisé en ce que la commande de l'envoi d'une faible pression de freinage ne se produit qu'au-dessus d'une vitesse limite faible.

5.- Dispositif de régulation antipatinage selon l'une des revendications 1 à 4, caractérisé en ce que la commande de l'envoi d'une faible pression de freinage ne se produit que si un virage est détecté.

6.- Dispositif de régulation antipatinage selon une des revendications 1 à 5, caractérisé en ce que le dispositif de commande d'une faible pression de freinage est verrouillé au-dessus d'une vitesse maximale de par exemple 130 km/h.

4